# EUROPEAN PATENT APPLICATION

(11) **EP 4 512 253 A1**
(43) Date of publication of application: **26.02.2025**
(21) Application number: 23193611.3
(22) Date of filing: 25.08.2023
(51) Int. Cl.: A23L 5/42, A23L 7/161, A23L 19/12

(54) **JET-MILLED NATURAL RED COLORING COMPOSITIONS FOR SNACKS**

(71) Applicant: Oterra A/S, 2970 Hørsholm (DK)
(72) Inventor: Kraszewski, AnnMarie, 2970 Hørsholm (DK); Schjoerring-Thyssen, Jakob, 2970 Hørsholm (DK)
(74) Representative: Willnegger, Eva

(57) **Abstract**

A process for coloring food products, in particular dry food products, even more particularly snacks, even more particularly chips or puff snacks, comprising applying a natural red coloring composition,
▪ wherein the natural red coloring composition comprises red sweet potato particles, and
▪ wherein the red sweet potato particles are jet-milled.

## Description

### FIELD OF THE INVENTION

The invention relates to the field of natural red coloring compositions for food applications, in particular for dry food applications, such as seasonings for snacks.

Anthocyanins are widely distributed in red fruits and vegetables. Therefore, anthocyanins can be used as alternatives to artificial or synthetic colorants through their brilliant red color, such as for example described in WO2013/079518 to the Applicant. However, this patent focuses on different applications such as beverages and drinks.

US2022202035A1 to Sweet Ninja Foods discloses a food sweetener powder having an average particle size of, at most, 1,500 µm and including pulverized dried fruit, vegetables or both fruit and vegetables. The food sweetener powder comprises, on a dry basis, at least 30% wt and at most 70% wt of total sugars and has a moisture content of from 1 to 6% by weight. However, this patent publication does not disclose any solution for food applications such as snacks.

The fact sheet for GNT's EXBERRY^{®} Coloring Foods from red sweet potato describes food and drink applications including beverages, marshmallows, panned confectionery, UHT milk and yogurt. However, this fact sheet does not describe the use as seasoning for puff snacks.

CN105558492A - inactive to Applicant-inventor ZHANG WENZHI discloses a preparation method of superfine purple sweet potato powder. The preparation method comprises crushing the purple sweet potato hull powder with a jet mill to obtain the fine purple sweet potato powder of 800-1000 meshes. However, this document does not disclose the use for coloring Cheetos^{®} or other dried or dry food products, wherein the coloring composition is obtained by jet-milling and is free of dispersant medium or surfactant/emulsifier.

Therefore, there still is a need for improved natural red colouring compositions for food applications, in particular dry food applications, such as seasonings for snacks.

### SHORT DESCRIPTION OF THE INVENTION

The inventors have surprisingly found that through jet-milling, the particle size of spray-dried red sweet potato particles can be cost-efficiently reduced from above 50 microns to 1 to 10 microns. Surprisingly, the jet-milled red sweet potato can be used for stably and evenly coloring food products such as chips and puff snacks with a coloring performance similar to the synthetic reference FD&C Red 40 Lake.

Importantly, no off-notes or off-flavors are observed as with other natural coloring compositions, such as red beet. Since no insect-based coloring composition is used, the coloring composition is acceptable and suitable for vegan applications.

Moreover, the inventors found that the jet-milled red sweet potato can be free of any sweetener, dispersant medium, surfactant or emulsifier.

Accordingly, a first aspect of the present invention is a process for coloring food products, in particular dry food products, even more particularly snacks, even more particularly chips or puff snacks, comprising applying a natural red coloring composition,
▪ wherein the natural red coloring composition comprises red sweet potato particles, and
▪ wherein the red sweet potato particles are jet-milled.

In another aspect, the red sweet potato particles further comprise dried glucose syrup or maltodextrin.

In another aspect, the volumetric particle size distribution of the red sweet potato particles is as follows:
▪ Dv50 is in the range from 0.1 µm to 25 µm, preferably from 1 µm to 10 µm;
▪ Dv10 is in the range from 0.01 µm to 10 µm, preferably from 0.1 µm to 5 µm; and/or
▪ Dv90 is in the range from 0.1 µm to 50 µm, preferably from1 µm to 30 µm
as determined with laser diffraction.

The terms µm and microns are used interchangeably.

In another aspect, the natural red coloring composition is applied as part of a seasoning, a bouillon, compound coating, a fat filling or a compressed tablet.

In another aspect, the natural red coloring composition is applied as part of a seasoning in a concentration from 1.0 weight% (w%) to 10.0 w%, preferably from 3.0 w% to 7.0 w%, even more preferably from 4.0 w% to 6.0 w% as compared to the total weight of the seasoning.

The terms weight% and w% are used interchangeably.

In another aspect, the natural red coloring composition is applied as part of a bouillon in a concentration from 0.5 w% to 10.0 w%, preferably from 1.0 w% to 6.0 w%, even more preferably from 2.5 w% to 5.5 w% as compared to the total weight of the bouillon.

In another aspect, the natural red coloring composition is applied as part of a compound coating in a concentration from 0.5 w% to 10.0 w%, preferably from 1.0 w% to 6.0 w%, even more preferably from 2.5 w% to 5.0 w% as compared to the total weight of the compound coating.

In another aspect, the natural red coloring composition is applied as part of a fat filling in a concentration from 0.5 w% to 10.0 w%, preferably from 0.5 w% to 6.0 w%, even more preferably from 2.5 w% to 5.0 w% as compared to the total weight of the fat filling.

In another aspect, the natural red coloring composition is applied as part of a compressed tablet in a concentration from 0.5 w% to 10.0 w%, preferably from 0.5 w% to 4.0 w%, even more preferably from 1 w% to 3.0 w% as compared to the total weight of the compressed tablet.

In another aspect, the natural red coloring composition is applied in the form of a seasoning or coating to a food product, in particular a dry food product, even more particularly snacks, even more particularly chips or puff snacks, and wherein the amount of the natural red coloring composition is from 0.1 w% to 10 w%, preferably from 0.25 w% to 5 w%, even more preferably from 0.5 w% to 1.5 w% as compared to the total weight of the food product

In another aspect, the natural red coloring is free of sweeteners, dispersant, surfactant or emulsifier.

In another aspect, the natural red coloring composition is in the form of a dry powder.

In another aspect, the natural red coloring composition comprises no further pigment.

Another aspect of the present invention is a seasoning or coating for a food product, in particular a dry food product, even more particularly snacks, even more particularly chips or puff snacks, comprising a natural red coloring composition,
▪ wherein the natural red coloring composition comprises red sweet potato particles, and
▪ wherein the red sweet potato particles are jet-milled.

Another aspect of the present invention is a food product, in particular dry food product, even more particularly a snack, even more particularly chips or puff snacks, colored with the natural red coloring composition according to the process of the invention or comprising the seasoning or coating of the invention.

### SHORT DESCRIPTION OF THE DRAWINGS

Figure 1 shows the coloring performance of the coloring compositions of example 1 in corn-based puff snacks.
Figure 1.1 shows the coloring performance of the synthetic red powder coloring Red 40 Lake in corn-based puff snacks according to Example 1.1 (comparative) which serves as the reference for the natural coloring compositions of example 1.2 and the comparative examples 1.3 to 1.7.
Figure 1.2 shows the coloring performance of the jet-milled red sweet potato in corn-based puff snacks according to Example 1.2 (invention). The jet-milled red sweet potato delivers a coloring very close to the synthetic reference of Example 1.1. - Figure 1.1. No off-notes were observed.
Figure 1.3 shows the coloring performance of the comparative red sweet potato in corn-based puff snacks according to Example 1.3 (comparative example). The comparative red sweet potato delivers a too blue coloring as compared to the synthetic reference of Example 1.1. - Figure 1.1. No off-notes were observed.
Figure 1.4 shows the coloring performance of the comparative red sweet potato in corn-based puff snacks according to Example 1.4 (comparative example). The comparative red sweet potato delivers a too pink coloring as compared to the synthetic reference of Example 1.1. - Figure 1.1. No off-notes were observed.
Figure 1.5 shows the coloring performance of insect-based carmine in corn-based puff snacks according to Example 1.5 (comparative example). Carmine delivers coloring very close to the synthetic reference of Example 1.1. - Figure 1.1. No off-notes were observed. However, carmine is insect-based and, thus, does not respond to vegan diet requirements. Consequently, carmine is less desirable for snack applications, such as corn-based puff snacks.
Figure 1.6 shows the coloring performance of the red beet in corn-based puff snacks according to Example 1.6 (comparative example). Red beet delivers a too pale coloring as compared to the synthetic reference of Example 1.1. - Figure 1.1. Slight earthy off-notes were observed.
Figure 1.7 shows the coloring performance of the jet-milled red beet in corn-based puff snacks according to Example 1.7 (comparative example). Jet-milled red beet delivers a too blue and specked coloring as compared to the synthetic reference of Example 1.1. - Figure 1.1. Slight earthy off-notes were observed.
Figure 2 shows the particle size distribution of comparative example 1.6 - red beet in the second brown curve and comparative example 1.7- jet-milled red beet in the first green curve.

### DETAILED DESCRIPTION OF THE INVENTION

The invention is now described in further detail without, however, limiting its scope.

### Natural red coloring composition

Natural means in the context of the present invention of natural origin, such as extracted from plants.

Red means in the context of the present invention a coloring performance similar to the synthetic reference FD&C Red 40 Lake in a food product, in particular a dry food product, even more particularly snacks, even more particularly chips or puff snacks by visual inspection.

### Red sweet potato - RSWP

Red sweet potato, hereinafter also referred to as RSWP, Hansen sweet potato^{®}, or HSWP, describes any anthocyanin-containing extract of *ipomoea batatas.*

Usually, the anthocyanin content of the red sweet potato is between 61.5 mg/kg fresh weight and 573.5 mg/kg fresh weight expressed as cyanidin.

Preferably, the red sweet potato comprises based on the total amount of anthocyanins, 5-55 mol-% of an acylated pelargonidin derivative (1) of the following formula (shown in the protonized and thus positively charged form): 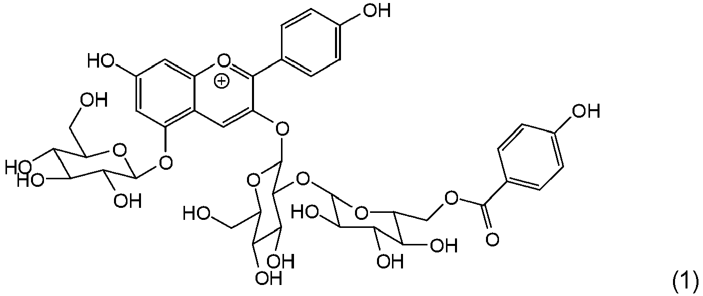 and based on the total amount of anthocyanins, 3-60 mol-% of an acylated pelargonidin derivative (2) of the following formula (shown in the protonized and thus positively charged form):

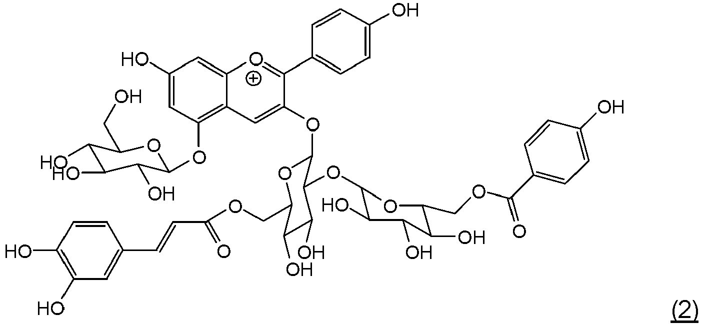

Preferably, the red sweet potato is the Hansen sweet potato^{®} commercially available from Oterra A/S.

Preferably, the red sweet potato is a spray-dried extract in the form of particles.

In one embodiment, the red sweet potato extract is present in an amount from 0.1 w% to 70 w%, preferably from 1 w% to 60 w%, even more preferably from 2.5 w% to 58 w% as compared to the total weight of the natural red coloring composition.

The natural red coloring composition usually comprises a carrier, in particular a spray drying carrier, such as dried glucose syrup 21 DE or maltodextrin.

Red sweet potato particles may be obtained by extraction from red sweet potato cultivars with acidified water followed by micro-filtration and optionally resin-absorption such as described in Example 1 or Example 2 of WO2013079518 to the Applicant.

In one embodiment, the red sweet potato particles are obtained by spray-drying of a red sweet potato extract. Suitable spray drying carriers are glucose syrup or maltodextrin.

Accordingly, in one embodiment, the red sweet potato particles comprise red sweet potato extract and a carrier such as dried glucose syrup, preferably DE 21, or maltodextrin.

Preferably, the red sweet potato particles consist of dried glucose syrup or maltodextrin and red sweet potato extract.

It is well known that the coloring shades of the red sweet potato vary according to the pH. Accordingly, preferably the pH is from 2 to 7.

### Jet-milling

Jet-milling means any form of vortex milling or airmilling. Suitable jet mills are commercially available for example the 200LS-N Air Jet Sieve & Mill or the Jet-o-Mixer^{®} commercially available from Fluid Energy.

In one embodiment, the red sweet potato particles are jet-milled at 10 to 50 lbs/hr.

In one embodiment, the red sweet potato particles are jet-milled at a pressure of 50 PSI to 150 PSI, preferably from 75 PSI to 125 PSI, even more preferably from 90 PSI to 100 PSI, and even more preferably at around100 PSI.

In one embodiment, the red sweet potato particles are jet-milled for a time period sufficiently long to obtain the particle size of the present invention.

Thus, through the jet-milling, the particle size is cost-efficiently reduced from coarser particles, for example with a particle size distribution D(v)50 of about 50 microns, such as for example obtained by spray-drying, to microparticles with a much smaller particle size distribution.as measured by laser diffraction.

### Particle size distribution of the red sweet potato particles and measurement

In one embodiment, the volumetric particle size distribution Dv50 of the jet-milled red sweet potato particles is in the range from 0.1 µm to 25 µm, preferably from 0.1 µm to 15 µm preferably from 1 µm to 10 µm as determined with laser diffraction, preferably using the PSA^{®} diffraction technology commercially available from Anton Paar.

In one embodiment, the volumetric particle size distribution Dv10 of the jet-milled red sweet potato particles is in the range from 0.01 µm to 10 µm, preferably from 0.1 µm to 5 µm as determined with laser diffraction preferably using the PSA^{®} diffraction technology commercially available from Anton Paar.

In one embodiment, the volumetric particle size distribution Dv90 of the jet-milled red sweet potato particles is in the range from 0.1 µm to 50 µm, preferably from 1 µm to 30 µm as determined with laser diffraction preferably using the PSA^{®} diffraction technology commercially available from Anton Paar.

### Further ingredients

The natural red coloring composition may further comprise further ingredients such as acidity regulators like citric acid, antioxidants like tocopherol or/and ascorbic acid, ascorbyl palmitate, carriers such as dried glucose solids and maltodextrin, vegetable oil, glycerol, emulsifiers.

The skilled person can choose the quantity of the ingredients so that they add up to 100 w%.

Preferably, the natural coloring composition consists of jet-milled red sweet potato particles.

Accordingly, in one embodiment, the natural red coloring composition does not comprise any further ingredients other than the red sweet potato particles.

In one embodiment, the natural red coloring composition does not comprise any pulverized dried fruit, vegetables or both fruit and vegetables other than red sweet potatoes.

In one embodiment, the natural red coloring is not a food sweetener powder.

In one embodiment, the natural red coloring comprises less than, on a dry basis, 30% wt of total sugars.

In one embodiment, the natural red coloring composition does not comprise any dispersants.

In one embodiment, the natural red coloring composition does not comprise any dispersant medium.

In one embodiment, the natural red coloring composition does not comprise any surfactant or emulsifier.

### Coloring performance

In one embodiment, the natural red coloring composition has a red color with a hue value H in the CIELAB color system in the range of 10-30, measured at an average of 5 readings, L*-value of (70.0 ± 0.1) in a 2.0 inch petri dish with a LAV aperture (30mm) using the Datacolor 850 in reflectance mode under D65 illuminant 10 Deg.

In another embodiment, the coloring performance is measured by visual observations in seasonings applied to snacks such as chips or corn puff snacks such as described in Example 1 as compared to a synthetic reference coloring compositions such as FD&C Red 40 Lake.

### Absence of off-notes

In one embodiment, the natural red coloring composition of the present invention is free of off-notes such as earthy flavors usually observable with red beet.

In another embodiment, the sensory performance is measured by taste observations in seasonings applied to snacks such as chips or corn puff snacks such as described in Example 1 as compared to a synthetic reference coloring compositions such as FD&C Red 40 Lake or red beet.

### Use and concentration of the natural red coloring composition in seasonings, bouillon, compound coatings, fat fillings or compressed tablets

The concentration of the natural red coloring composition may vary depending on the specific application, such as seasoning, bouillon, compound coating, fat fillings or compressed tablets. Preferably, the food product is a dry food product.

In another aspect, the natural red coloring composition is applied as coloring food in a seasoning, a bouillon, compound coating, a fat filling or a compressed tablet.

In another aspect, the natural red coloring composition is applied as part of a seasoning in a concentration from 1.0 w% to 10.0 w%, preferably from 3.0 w% to 7.0 w%, even more preferably from 4.0 w% to 6.0 w% as compared to the total weight of the seasoning.

In another aspect, the natural red coloring composition is applied as part of a bouillon in a concentration from 0.5 w% to 10.0 w%, preferably from 1.0 w% to 6.0 w%, even more preferably from 2.5 w% to 5.5 w% as compared to the total weight of the bouillon.

In another aspect, the natural red coloring composition is applied as part of a compound coating in a concentration from 0.5 w% to 10.0 w%, preferably from 1.0 w% to 6.0 w%, even more preferably from 2.5 w% to 5.0 w% as compared to the total weight of the compound coating.

In another aspect, the natural red coloring composition is applied as part of a fat filling in a concentration from 0.5 w% to 10.0 w%, preferably from 0.5 w% to 6.0 w%, even more preferably from 2.5 w% to 5.0 w% as compared to the total weight of the 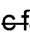 at filling.

In another aspect, the natural red coloring composition is applied as part of a compressed tablet in a concentration from 0.5 w% to 10.0 w%, preferably from 0.5 w% to 4.0 w%, even more preferably from 1 w% to 3.0 w% as compared to the total weight of the compressed tablet.

### Concentration of seasoning or coating in final food product

In one embodiment, the seasoning or coating comprising the natural red coloring composition is applied in an amount from 0.1 w% to 15 w%, preferably from 0.5 w% to 10 w%, even more preferably from 1 w% to 5 w% as compared to the total weight of the dry food products, such as snacks such as puff snacks.

In one embodiment, wherein the natural red coloring composition is applied in the form of a seasoning or coating to a final food product, in particular a dry final food product, even more particularly snacks, even more particularly chips or puff snacks, and wherein the amount of the natural red coloring composition is from 0.1 w% to 10 w%, preferably from 0.25 w% to 5 w%, even more preferably from 0.5 w% to 1.5 w% as compared to the total weight of the final food product. A final food product means in general a food product that is ready for human consumption.

### Food applications and uses

The natural red coloring composition of the present invention may be applied to a wide variety of food applications, such as seasoning, bouillon, compound coating, or fat fillings.

Accordingly, another aspect of the present invention is the use of a natural red coloring composition as a coloring food in a seasoning or coating for a food product, in particular a dry food product, even more particularly snacks, even more particularly chips or puff snacks,
▪ wherein the natural red coloring composition comprises red sweet potato particles, and
▪ wherein the red sweet potato particles are jet-milled.

Another aspect of the present invention is a seasoning or coating for a food product, in particular a dry food product, even more particularly snacks, even more particularly chips or puff snacks, comprising a natural red coloring composition,
▪ wherein the natural red coloring composition comprises red sweet potato particles, and
▪ wherein the red sweet potato particles are jet-milled.

Another aspect of the present invention is a food product, in particular dry food product, even more particularly a snack, even more particularly chips or puff snacks, comprising a natural red coloring composition,
▪ wherein the natural red coloring composition comprises red sweet potato particles, and
▪ wherein the red sweet potato particles are jet-milled.

Preferred dry food products are puff snacks, even more particularly corn-based puff snacks, commercially available for example under the brand Cheetos^{®} from Frito-Lay, a subsidiary of PepsiCo.

### EXAMPLES

The following examples illustrate the natural red powder coloring compositions further without, however, limiting the scope of the invention.

Following natural red coloring compositions were tested according to the following methods:

### Example 1 - Seasoning:

The seasoning of Example 1 consists of the following ingredients:

| **Ingredient** | **%** |
|---|---|
| Flour salt | 25.00 |
| Dextrose | 15.00 |
| Sunflower oil | 0.300 |
| Silicon dioxide | 0.300 |
| Coloring composition (powder) | x |
| Maltodextrin | 59.40 |
| Total | 100.00 |

### Example 1 - Seasoning manufacturing method:

The seasoning was manufactured according to the following process steps:
1. Weigh into bowl of stand mixer.
2. Weigh oil onto salt and blend on medium high until well mixed and no oil lumps remain.
3. Add coloring composition
   3a. If using a liquid color, add to salt and blend well (medium high speed), scraping sides, until uniform and no color lumps remain.
   3b. If using powder color, add to salt, but add maltodextrin or whey next. Add silicon dioxide last.
4. Add silicon dioxide and blend until uniform (medium speed).
5. Add maltodextrin or whey and blend until uniform color (medium-low speed).

### Example 1 - Topical application:

The topical application was performed according to the following process steps:
1. Weigh out 45g unsalted potato chips in plastic bag.
2. Weigh out 5g seasoning.
3. Shake out chips to lay flat in plastic bag and evenly distribute half the seasoning. Shake well in bag.
4. Observe color after about 24 hours or overnight.

### Example 1 - Oil slurry application:

The oil slurry application was performed according to the following process steps:
1. Weigh out 35.0g corn puffs into a large metal bowl.
2. In a small beaker, weigh out 10.5g sunflower oil and 4.5 g seasoning. Mix well.
3. Using a spoon, drizzle oil slurry over corn puffs and mix in a circular motion. Continue until all slurry is used.
4. Puffs may be wet; allow to dry for about 15-30 min.
5. Observe color after about 24 hours or overnight.

### Example 1 - Sensory evaluation:

The color match is determined by visual observation comparing the natural pigments to the artificial color, FD&C Red 40 Lake in application. Colorimetric data is not required due to the clear observation of trials to determine a match.

The flavor differentiation is determined by individually tasting samples. No formal testing is done. Based on previous knowledge of pigments such as beet, an earthy note is known to be possibly detected. Such information is used to observe the absence or presence of an off-aroma or off-flavor. True evaluation is best determined when used in the customer's seasoning or base product.

### Example 1 - Synthetic reference FD&C Red 40 Lake:

The reference coloring composition is FD&C Red 40 Lake. It is a synthetic food dye common in dairy products, sweets, and beverages with the following structural formula (Example 1.1.):

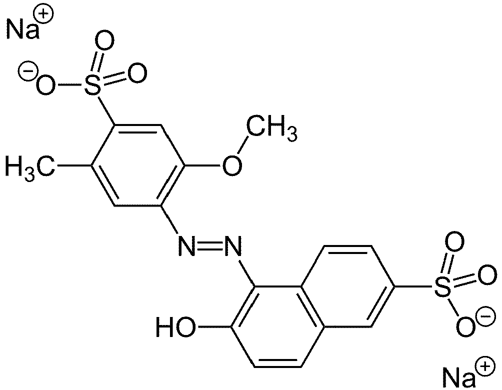

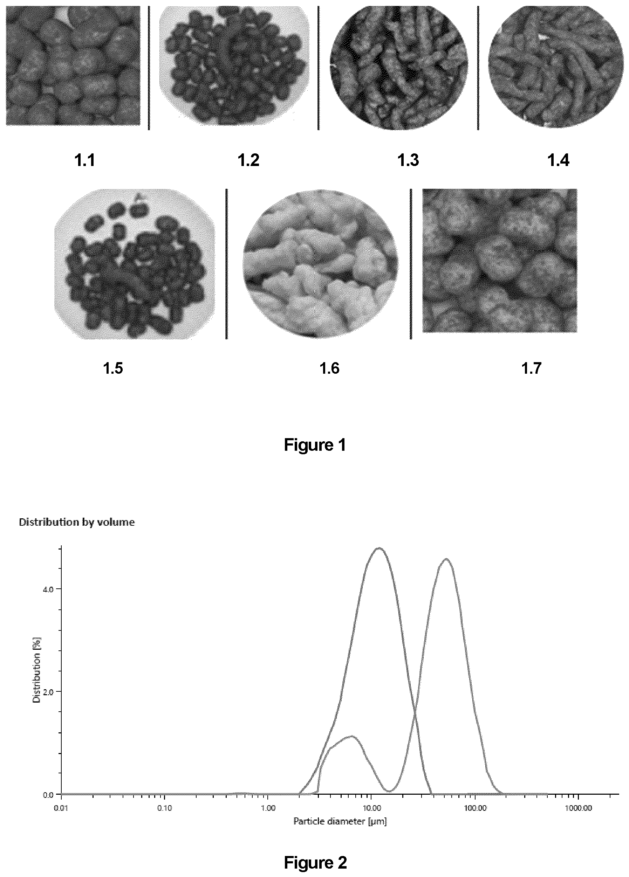

### Example 1 - Figure 1: Coloring performance in corn-based puff-snacks as compared to the synthetic reference FD&C Red 40 Lake :

The red sweet potato is the Hansen sweet potato^{®} commercially available from Oterra A/S. Table 1 shows the coloring performance in corn-based puff-snacks.

**Table 1:**

| **Example** | **1.1** | **1.2** | **1.3** | **1.4** | **1.5** | **1.6** | **1.7** |
|---|---|---|---|---|---|---|---|
| **Pigment** | **Syntheti c Red 40 Lake** | **Jet-milled RSWP** | **RSW P** | **RSW P** | **Carmine** | **Beet** | **Jet-milled beet** |
| Comparative = Comp. | Comp. | Invention | Comp. | Comp. | Comp. | Comp . | Comp. |
| w% of coloring compositio n in seasoning | 2.0 | 10.0 | 5.0 | 10.0 | 5.0 | 3.0 | 7.5 |
| w% of coloring compositio n in corn puff | 0.25 | 1.25 | 0.63 | 1.25 | 0.63 | 0.38 | 0.94 |
| Particle size method | Anton Paar | 5 micron s Anton Paar | Anton Paar | Anton Paar | Anton Paar | Anton Paar | 10 m icrons/ Anton Paar |
| Sensory (visual, gustatory) as | Reference | Very close match to Red | Too blue, no off-notes | Too pink, no off-notes | Very close match to Red 40 Lake, no | Too pale, slight earthy | Too blue and specked ; slight |
| compared to reference | | 40 Lake, no off-notes | | | off-notes, as insect-based pigment less acceptabl e in snack market | off-notes | earthy off-notes |
| Figure | **1.1** | **1.2** | **1.3** | **1.4** | **1.5** | **1.6** | **1.7** |

### Example 2 - Figure 2: Particle size measurement:

Figure 2 and Table 2 show the particle size distribution of comparative Example 1.6 red beet in the second brown curve (comparison) and comparative Example 1.7- jet-milled red beet in the first green curve. The particle size (Volume) distribution measurement is performed according to Anton Paar.

**Table 2:**

| **Measurements (volume)** - **undersize in micrometers (microns)** | | | | | | |
|---|---|---|---|---|---|---|
| Example | **D10** | **D50** | **D90** | **Mean size** | **Span** | **Curve Color** |
| 2.1 Jet-milled beet | 4.831 | 10.542 | 20.427 | 12.166 | 1.479 | green |
| 2.2 Beet | 6.053 | 43.763 | 83.153 | 47.315 | 1.762 | brown |

| **Statistics (volume)** - **undersize** | | | | | | |
|---|---|---|---|---|---|---|
| **Example** | **D10** | **D50** | **D90** | **Mean size** | **Span** | |
| Mean value | 5.442 | 27.153 | 51.792 | 29.740 | 1.621 | |
| Standard deviation | 0.8643 | 23.490 | 44.356 | 24.854 | 0.200 | |
| Rel. standard deviation | 15.88 | 86.51 | 85.64 | 83.57 | 12.32 | |

### Example 3 - Particle size measurement of jet-milled red sweet potato:

The particle size distribution of an exemplary coloring composition according to the invention (Example 1.2) comprising jet-milled red sweet potato is shown in Table 3 below.

**Table 3:**

| **Example 3** | **D50 = 5 microns** | **D90 = 10 microns** |
|---|---|---|
| Raw Feed | 22.36 | 48.05 |
| Run 1 | 4.504 | 9.860 |
| Run 2 | 4.366 | 9.567 |
| Run 3 | 4.532 | 10.40 |
| Run 4 | 4.390 | 9.978 |

The results of Table 3 show that the particle size is smaller as compared to beet and jet-milled beet respectively (Example 2 - Figure 2, Table 2).

Therefore, the jet-milled red sweet potato of the invention has more surface area.

The increased surface area results in a more intense red shade of the jet-milled red-sweet potato.

## Claims

1. A process for coloring food products, in particular dry food products, even more particularly snacks, even more particularly chips or puff snacks, comprising applying a natural red coloring composition,
▪ wherein the natural red coloring composition comprises red sweet potato particles, and
▪ wherein the red sweet potato particles are jet-milled.

2. The process according to claim 1, wherein the volumetric particle size distribution of the red sweet potato particles
▪ Dv50 is in the range from 0.1 µm to 25 µm, preferably from 1 µm to 10 µm;
▪ Dv10 is in the range from 0.01 µm to 10 µm, preferably from 0.1 µm to 5 µm; and/or
▪ Dv90 is in the range from rom 0.1 µm to 50 µm, preferably from 1 µm to 30 µm
as determined with laser diffraction.

3. The process according to any one of the preceding claims, wherein the red sweet potato particles further comprise dried glucose syrup or maltodextrin.

4. The process according to any one of the preceding claims, wherein the natural red coloring composition is applied as part of a seasoning, a bouillon, compound coating, a fat filling or a compressed tablet.

5. The process according to any one of the preceding claims, wherein the natural red coloring composition is applied as part of a seasoning in a concentration from 1.0 w% to 10.0 w%, preferably from 3.0 w% to 7.0 w%, even more preferably from 4.0 w% to 6.0 w% as compared to the total weight of the seasoning.

6. The process according to any one of the preceding claims, wherein the natural red coloring composition is applied as part of a bouillon in a concentration from 0.5 w% to 10.0 w%, preferably from 0.1 w% to 6.0 w%, even more preferably from 2.5 w% to 5.5 w% as compared to the total weight of the bouillon.

7. The process according to any one of the preceding claims, wherein the natural red coloring composition is applied as part of a compound coating in a concentration from 0.5 w% to 10.0 w%, preferably from 1.0 w% to 6.0 w%, even more preferably from 2.5 w% to 5.0 w% as compared to the total weight of the compound coating.

8. The process according to any one of the preceding claims, wherein the natural red coloring composition is applied as part of a fat filling in a concentration from 0.5 w% to 10.0 w%, preferably from 0.5 w% to 6.0 w%, even more preferably from 2.5 w% to 5.0 w% as compared to the total weight of the fat filling.

9. The process according to any one of the preceding claims, wherein the natural red coloring composition is applied as part of a compressed tablet in a concentration from 0.5 w% to 10.0 w%, preferably from 0.5 w% to 4.0 w%, even more preferably from 1 w% to 3.0 w% as compared to the total weight of the compressed tablet.

10. The process according to any one of the preceding claims, wherein the natural red coloring composition is applied in the form of a seasoning or coating to a food product, in particular a dry food product, even more particularly snacks, even more particularly chips or puff snacks, and wherein the amount of the natural red coloring composition is from 0.1 w% to 10 w%, preferably from 0.25 w% to 5 w%, even more preferably from 0.5 w% to 1.5 w% as compared to the total weight of the food product.

11. The process according to any one of the preceding claims, wherein the natural red coloring is free of sweeteners, dispersant, surfactant or emulsifier.

12. The process according to any one of the preceding claims, wherein the natural red coloring composition is in the form of a dry powder.

13. The process according to any one of the preceding claims, wherein the natural red coloring composition comprises no further pigment.

14. A seasoning or coating for a food product, in particular a dry food product, even more particularly snacks, even more particularly chips or puff snacks, comprising a natural red coloring composition,
▪ wherein the natural red coloring composition comprises red sweet potato particles, and
▪ wherein the red sweet potato particles are jet-milled.

15. A food product, in particular dry food product, even more particularly a snack, even more particularly chips or puff snacks, colored according to the process of any one of claims 1 to 13 or comprising the seasoning or coating of claim 14.
